# EUROPÄISCHE PATENTSCHRIFT

(11) **EP 0 803 970 B1**
(45) Veröffentlichungstag und Bekanntmachung des Hinweises auf die Patenterteilung: **25.10.2000**
(21) Anmeldenummer: 97400924.3
(22) Anmeldetag: 23.04.1997
(51) Int. Cl.: H02P 7/00

(54) **Verfahren zur überschwingfreien Drehzahlregelung von Gleichstrommotoren und Drehstrommotoren**
Overshootfree speed control method for dc and ac motors
Méthode de la régulation de vitesse exempt de suroscillations pour des moteurs à courant continu et à courant alternatif

(30) Priorität: 24.04.1996 DE 19617866; 24.04.1996 DE 19617867
(43) Veröffentlichungstag der Anmeldung: 29.10.1997
(73) Patentinhaber: ALCATEL, 75008 Paris (FR)
(72) Erfinder: Dao Hoang-Minh, 14089 Berlin (DE)
(74) Vertreter: Dreiss, Fuhlendorf, Steimle & Becker

(56) Entgegenhaltungen:
- EP-A- 0 313 928
- DD-A- 116 359
- A. BUXBAUM, K. SCHIERAU: "Berechnung von Regelkreisen der Antriebstechnik" AEG-TELEFUNKEN HANDBÜCHER, Bd. 16, 1980, Seiten 16-20, 116-119, 153-168, XP002055693

## Beschreibung

Die Erfindung bezieht sich auf ein Verfahren zur überschwingfreien Drehzahlregelung von Gleich- und Drehstrommotoren mit unterlagerter Strom- bzw. Drehmomentenregelung in einem starren Antriebsstrang oder in einem schwingfähigen Antriebsstrang.

Ein derartiges Verfahren ist in der Anmeldung EP-A-0 313 928 beschrieben.

Maßgebend für die Regeldynamik einer Drehzahlregelung sind die An- und Ausregelzeit der Regelgröße nach einem Drehzahl- bzw. einem Laststoß. Zu der Regelgüte kommen bei einem herkömmlichen Pl-Regler noch das Überschwingen der Drehzahl nach einem Führungsstoß sowie der Drehzahleinbruch nach einem Laststoß, vgl. Buxbaum, Arne / Schierau, Klaus: Berechnung von Regelkreisen der Antriebstechnik, 4. Aufl., AEG-Telefunken AG, Berlin, Frankfurt am Main 1980, Bilder 11, 12, 177 und 178.

Ein Pl-Regler kombiniert bekanntlich die schnelle Reaktion eines P-Reglers mit dem Ausregeln eines I-Reglers nach einer Störung. Der Integralanteil sorgt für die Ausregelung der Regelabweichung als Differenz zwischen dem Soll- und dem Istwert der Regelgröße. Da der Integralanteil des Pl-Reglers eine schnelle Änderung des Stellsignals nicht zuläßt, ist das Integrationsverhalten des Integralanteils Ursache für das Überschwingen des Stellsignals und damit auch der Regelgröße.

Um ein ausgewogenes Verhältnis zwischen der Überschwingweite nach einem Führungsstoß und dem Drehzahleinbruch nach einem Laststoß zu erhalten, wird der Regler nach der Methode des symmetrischen Optimums eingestellt, dabei wird eine Überschwingweite von ca. 40% des Drehzahlsprunges nach einem Führungsstoß in Kauf genommen, vgl. Buxbaum / Schierau, S. 116 ff. Soll das Überschwingen kleiner sein, muß der Regler langsamer eingestellt werden, und je langsamer die Drehzahlregelung ist - also um so größer die An- und Ausregelzeit - um so größer ist auch der Drehzahleinbruch nach einem Laststoß. Ist ein Überschwingen der Drehzahl unerwünscht, so ist entweder ein Drehzahlstoß zu vermeiden, beispielsweise wird der Drehzahlsollwert an eine Rampenfunktion geführt, oder eine sehr langsame Drehzahlregelung ist unausweichlich. Ein langsam eingestellter Drehzahlregler liefert nach einem Laststoß einen großen Drehzahleinbruch, der aber oft unerwünscht ist.

Wenn die Welle einschließlich Kupplung und Getriebe zwischen Motor und Last nicht ausreichend starr ist, d.h. wenn der Antriebsstrang ein schwach gedämpftes schwingungsfähiges Mehrmassensystem bildet, ist der Drehzahlregler noch langsamer einzustellen, damit die Regelung nicht instabil wird, vgl. Raatz, Eckart: Drehzahlregelung eines stromrichtergespeisten Gleichstrommotors mit schwingungsfähiger Mechanik. Techn. Mitt. AEG-Telefunken 60 (1970) 6, S. 369-372.

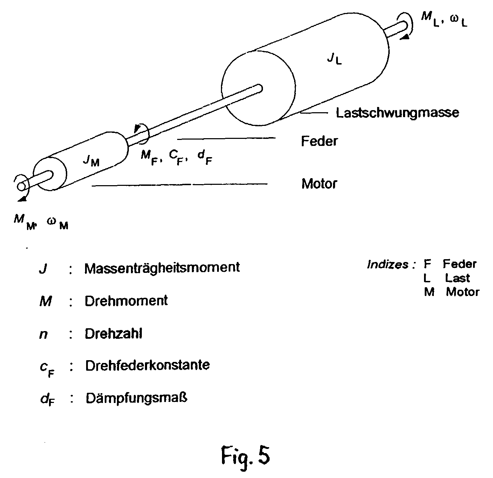

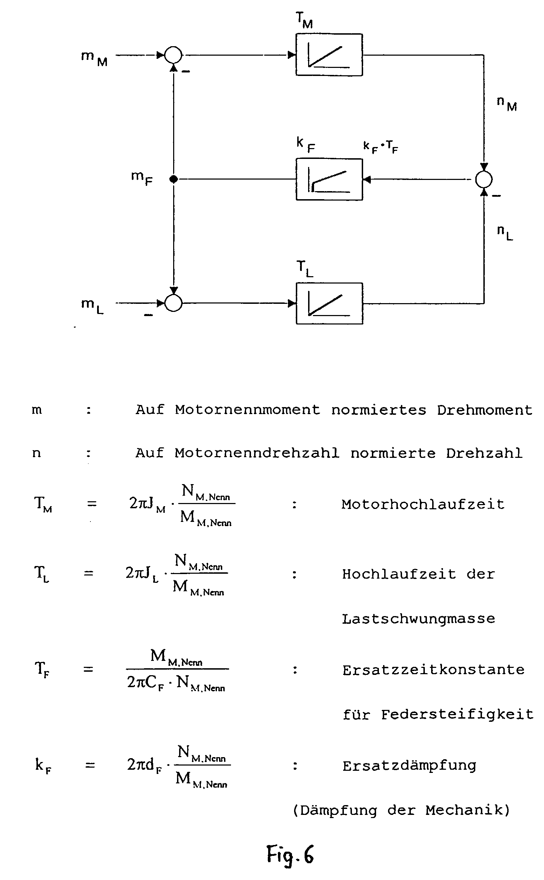

In vielen Fällen kann der gesamte Antriebsstrang als ein elastisch gekoppeltes Zweimassensystem gemäß Fig. 5 angenähert werden. Im Fall eines schwingungsfähigen Zweimassensystems kann dessen Strukturbild nach Raatz wie in Fig. 6 angegeben werden. Von den im Strukturbild gemäß Fig. 6 vorkommenden Größen Motordrehmoment m_{M}, Federdrehmoment m_{F}, Lastdrehmoment m_{L}, Motordrehzahl n_{M} und Drehzahl n_{L} der Lastschwungmasse stehen den regelungstechnischen Zwecken lediglich Motordrehzahl und Motor (Wirk-)strom, der ein Maß für das vom Motor gelieferte Drehmoment ist, zur Verfügung, während Lastdrehmoment, Lastdrehzahl und Federdrehmoment für eine direkte Messung in der Regel unzugänglich sind bzw. eine Messung nur mit sehr großem Aufwand möglich ist.

Mit der Erfindung soll nun die Aufgabe gelöst werden, ein Verfahren der eingangs genannten Art so auszugestalten, daß ein Überschwingen des Drehzahllistwertes sowohl bei einem starren Antriebsstrang als auch bei einem schwingfähigen Antriebsstrang nach einer sprungförmigen Änderung des Drehzahlsollwertes vermieden wird, wobei die Regeldynamik bei diesem Verfahren besser ist als die eines nach der Methode des symmetrischen Optimums eingestellten Pl-Reglers.

Diese Aufgabe wird mit dem im ersten Patentanspruch beschriebenen Verfahren gelöst. In den Patentansprüchen zwei bis fünf werden vorteilhafte Ausgestaltungen und Varianten der Erfindung angegeben.

Das Wesen der Erfindung besteht darin, daß durch die vom Zustand der Drehzahlabweichung anhängige Begrenzung des Ausgangssignals des Integralgliedes und durch die lastkompensierende Vorsteuerung vorteilhafterweise das Überschwingen des Drehzahlistwertes nach einem Sprung des Drehzahlsollwertes vermieden wird. Gleichzeitig kann durch die nun ohne weiteres mögliche Erhöhung der Proportionalverstärkung des Drehzahlreglers der Drehzahleinbruch nach einem Laststoß gegenüber den bekannten Lösungen kleiner gehalten werden.

Bei einem schwingfähigen Antriebsstrang wird die lastkompensierende Vorsteuerung aus dem Inverse-Modell, das aus dem Strukturbild gemäß Fig. 6 entwickelt wurde, ermittelt.

Die Erfindung wird nunmehr an einem Ausführungsbeispiel erläutert. in der dazugehörigen Zeichnung zeigen:
- Fig. 1: ein Blockschaltbild einer Schaltungsanordnung zur Durchführung des Verfahrens bei einem starren Antriebsstrang,
- Fig. 2: ein detailliertes Blockschaltbild des Regelungsteil 6 in Fig. 1,
- Fig. 3: a, b, c, d funktionale Darstellungen der in Fig. 2 eingezeichneten Signale,
- Fig. 4: einen Drehzahlverlauf als Funktion der Zeit gemäß dem Stand der Technik (a) und gemäß der Erfindung (b) bei einem starren Antriebsstrang,
- Fig. 5: eine Darstellung eines elastisch gekoppelten Zweimassensystems nach dem Stand der Technik,
- Fig. 6: ein Strukturbild des Zweimassensystems nach dem Stand der Technik,
- Fig. 7: ein Blockschaltbild einer Schaltungsanordnung zur Durchführung des Verfahrens bei einem schwingfähigen Antriebsstrang und
- Fig. 8: einen Drehzahlverlauf als Funktion der Zeit gemäß dem Stand der Technik (a) und gemäß der Erfindung (b) bei einem schwingfähigen Antriebsstrang.

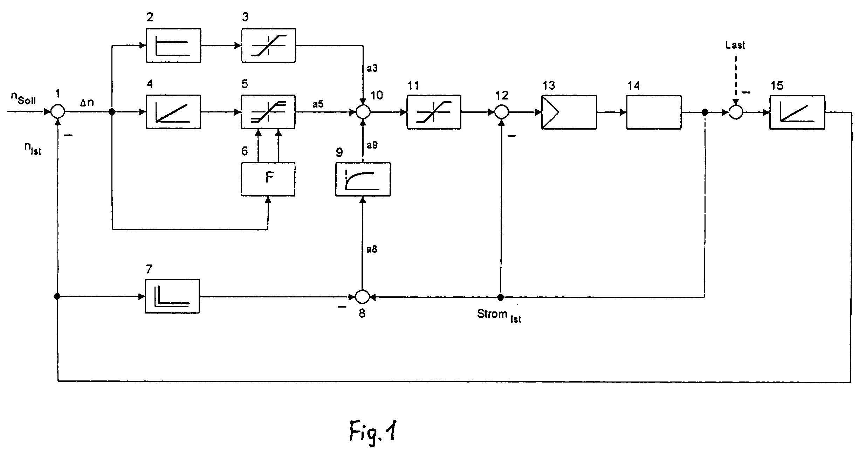

Gemäß Fig. 1 besteht die Schaltungsanordnung für die Drehzahlregelung mit unterlagerter Strom- bzw. Drehmomentenregelung bei einem starren Antriebsstrang aus den Bausteinen 1 bis 11. Ein Strom- bzw. Drehmomentenregler ist mit 13 und die elektrische Strecke ist mit 14 bezeichnet. Für die mechanische Regelstrecke 15 wird Integralverhalten angenommen. Die Differenz zwischen dem vorgegebenen Drehzahlsollwert n_{Soll} und dem gemessenen Drehzahlistwert n_{Ist}, wird in einem ersten Subtrahierer 1 zur Drehzahlabweichung Δn gebildet, in einem Proportionalglied 2 verstärkt und mit einem Begrenzer 3 gegebenenfalls eingegrenzt, um dann als erstes Eingangssignal a3 einem Summierer 10 vorzuliegen. Der Drehzahlistwert n_{Ist} wird in einem Differenzierglied 7 differenziert und dann in einem zweiten Subtrahierer 8 von der Rückführung der unterlagerten Strom- bzw. Drehmomentenregelung abgezogen, Signal a8.

Bei entsprechender Parametrierung des Differenziergliedes 7, gemäß der mechanischen Strecke 15, entspricht der ermittelte Wert a8 dem am Motor angreifenden Lastmoment. Nach der Glättung in einem Tiefpaßglied 9 steht ein Vorsteuerungssignal a9 als zweites Eingangssignal dem Summierer 10 zur Verfügung. Die Aufgabe des Vorsteuerungssignals a9 im stationären Zustand der Regelstrecke entspricht dem Integralanteil eines Pl-Reglers: dem unterlagerten Strom- bzw. Drehmomentenregelkreis den Kompensationsanteil entsprechend dem Lastmoment vorzugeben, während die Regelabweichung Δn quasi Null ist.

Die Aufgabe eines Regelungsteils 6 ist es, in Abhängigkeit vom Zustand der Drehzahlabweichung Δn die Grenzen eines Begrenzers 5, welcher die maximale bzw. minimale Ausgangsgröße eines Integriergliedes 4 determiniert, zu beeinflussen: sie werden mit zunehmender Drehzahlabweichung Δn kleiner gesteuert.

In einer Realisierungsvariante der Schaltung ist es auch möglich, den Ausgang des Proportionalgliedes 2 auf den Eingang des Integriergliedes 4 zurückzuführen.

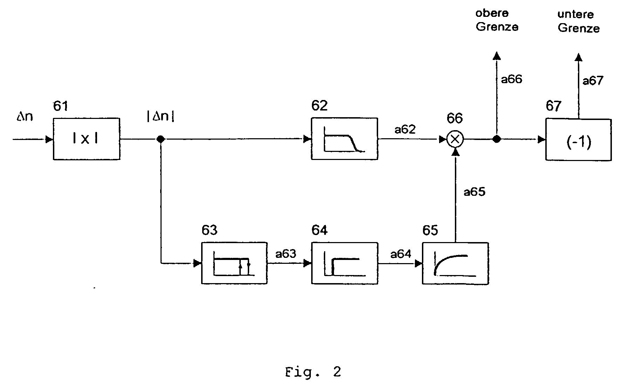

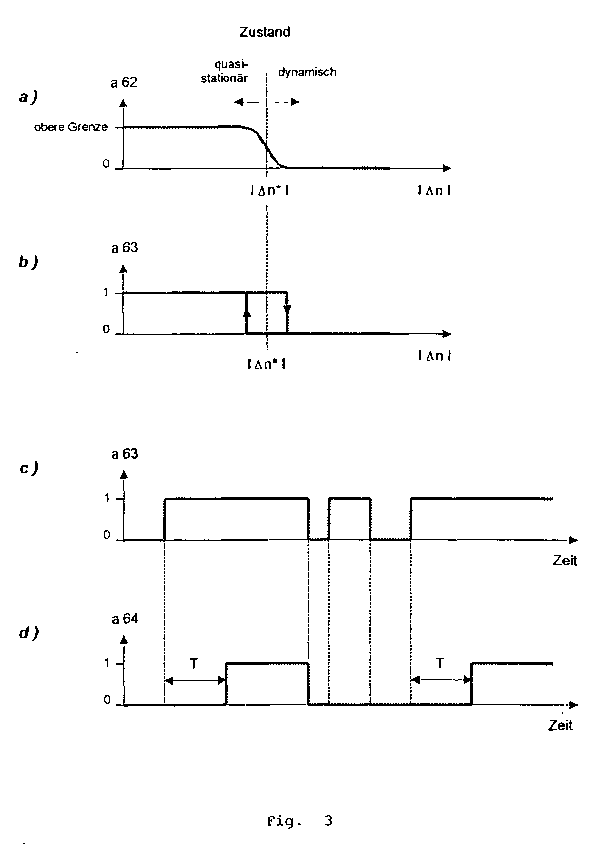

Fig. 2 stellt eine Lösungsmöglichkeit zur symmetrischen Steuerung der oberen und unteren Grenze des Begrenzers 5 dar: der besseren Operationalisierung halber wird in einem Baustein 61 die Drehzahlabweichung Δn in ihren Betrag lΔnl umgeformt, dieser liegt dann am Eingang von Bausteinen 62 und 63 vor. Im Baustein 62 wird in Abhängigkeit vom Betrag der Drehzahlabweichung lΔnl ein Ausgangssignal a62 entsprechend dem Kurvenverlauf a der Fig. 3 gebildet: liegt die Drehzahlabweichung im quasi-stationären Bereich vor, d.h. wenn lΔnl kleiner als ein bestimmter Wert |Δn^{∗}| wird, der den gesamten Bereich von |Δn| in einen quasi-stationären und einen dynamischen Bereich unterteilt, determinieren das Ausgangssignal a62 und das Ausgangssignal a65 eines Bausteins 65 die maximale obere Grenze des Begrenzers 5. Liegt dagegen |Δn| im dynamischen Bereich, wird das Signal a 62 Null; dadurch werden die Grenzen des Begrenzers 5 geschlosssen, die eine Unterdrückung des Integralanteils der Drehzahlregelung bewirken.

Um eine abrupte Auf- und Zusteuerung der Grenzen zu vermeiden, wird der Übergang vom quasi-stationären Bereich zum dynamischen Bereich und umgekehrt des Kurvenverlaufs der abhängigen Variablen a62 mit Verschliffen oder zumindest mit einer Rampenfunktion versehen. Bausteine 63 bis 66 helfen, das Flattern der Grenzen zu vermeiden.

Der Baustein 63 fungiert wie ein Zweipunktschalter mit Hysterese. Das Ausgangssignal ist
a63 = 1 für |Δn| < |Δn*| und
a63 = 0 für |Δn| > |Δn*| siehe Kurve b der Fig. 3.

Das Hin- und Herschalten um den Schaltpunkt |Δn*| wird durch den Einbau einer Hysterese um denselben vermieden. Der Baustein 64 ist ein Zeitglied mit einer Einschaltverzögerungsfunktion. Der Wert eins des Eingangssignals a63 liegt erst nach einer Verzögerungszeit T am Ausgang des Bausteins 64 als Signal a64 vor. Dadurch wird ein unnötig häufiges Umschalten im Bereich der Übergangsphase vom quasi-stationären Bereich zum dynamischen Bereich vermieden siehe Kurven c und d der Fig. 3. Im Tiefpaß 65 beispielsweise als Verzögerungsglied erster Ordnung realisiert, wird das Signal a64 zum Signal Signal a65 geglättet, das multiplikativ mit dem Signal a62 zum Signal a66 als obere Grenze des Begrenzers 5 gebildet wird. Die untere Grenze als Signal a67 wird durch Negation des Signals a66 im Baustein 67 gebildet.

Im Regelungsteil 6 werden also die obere und die untere Grenze des Begrenzers 5 in Abhängigkeit vom Zustand der Drehzahlabweichung ermittelt. Im dynamischen Zustand, d.h. wenn die Drehzahlabweichung außerhalb einer bestimmten Bandbreite liegt, werden die Grenzen des Begrenzers 5 zugesteuert, dadurch wird der Integralanteil der Drehzahlregelung unterdrückt, der Wert des Signals a5 ist Null und damit auch das Überschwingen.

Beim Pl-Regler hängt die Stabilitätsgrenze von der Güte der gemessenen Regelgröße und von der Abtastzeit der Regelung ab, wenn die Regelung digital arbeitet. Die Stabilitätsgrenze ist definiert durch die kleinstmögliche Integrationszeitkonstante T_{l,min} bei einem bestimmten Verstärkungsfaktor k bzw. durch den größtmöglichen Verstärkungsfaktor kₘₐₓ bei einer bestimmten Integrationszeitkonstante Tₗ, ohne daß die Drehzahl anfängt zu schwingen. Dabei wird die Grenzverstärkung kmax umso kleiner sein, je kleiner die Integrationszeitkonstante Tₗ eingestellt ist. Bei dem hier vorgestellten Drehzahlregelungsverfahren wird der Integralanteil im dynamischen Zustand unterdrückt, das entspricht einer unendlich hohen Integrationszeitkonstanten, die eine Erhöhung der Grenzverstärkung kmax erlaubt, ohne daß das Regelsystem instabil wird. Die Verstärkungserhöhung wirkt sich vorteilhaft aus auf die An- und Ausregelzeit sowie auf die Drehzahländerung nach einer Laständerung, d.h. es entsteht nur ein kleinerer Drehzahleinbruch nach einem Laststoß.

Im quasi-stationären Zustand, wenn die Drehzahlabweichung innerhalb einer bestimmten Bandbreite liegt, werden die obere und die untere Grenzwert des Begrenzers 5 geöffnet, so daß das Integralglied 4 die auftretende Regelabweichung ausregeln kann. Das Ausgangssignal a5 des Bausteins 5 ist das dritte Eingangssignal des Summierers 10. In einem Begrenzer 11 werden die Summe von a3, a5 und a9 gegebenenfalls eingeschränkt.

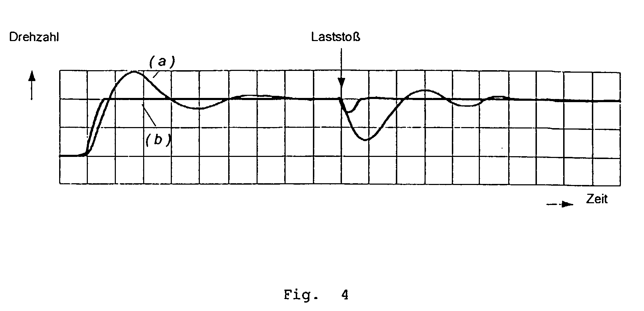

Fig. 4 zeigt den Drehzahlverlauf nach einem Führungs- und einem Laststoß durch Kurve a mit einem nach der Methode des symmetrischen Optimums eingestellten Pl-Regler und durch Kurve b mit dem Drehzahlregelungsverfahren nach der Erfindung.

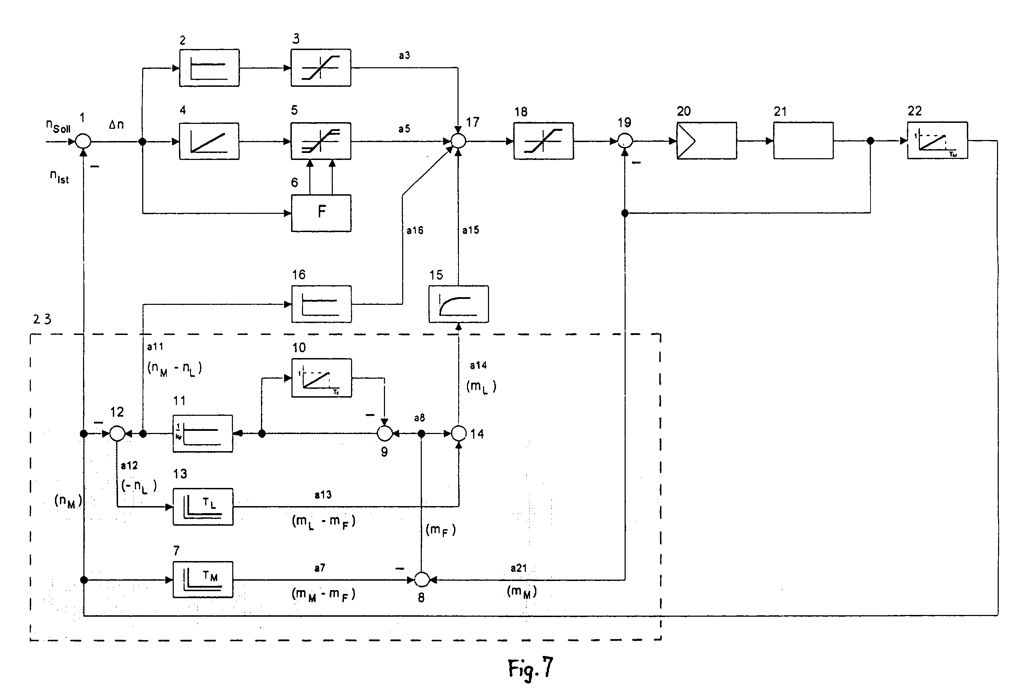

Ein Beispiel einer Schaltungsanordnung zur Durchführung des Verfahrens nach der Erfindung bei einem schwingfähigen Antriebsstrang ist in Fig. 7 als Blockschaltbild dargestellt und wird im folgenden erläutert: für die mechanische Regelstrecke 22 wird Integralverhalten angenommen, für das hier vorgestellte Verfahren wird das benötigte Lastdrehmoment m_{L} aus dem Inverse-Modell 23 des Strukturbildes in Fig. 6 gewonnen. Die Drehzahlregelung mit unterlagerter Strom- bzw. Drehmomentenregelung besteht aus den Bausteinen 1 bis 18. Ein Strom- bzw. Drehmomentenregler ist mit 20 und die elektrische Strecke ist mit 21 bezeichnet. Die Differenz zwischen dem vorgegebenen Motordrehzahlsollwert n_{Soll} und dem gemessenen Motordrehzahlistwert nₗₛₜ wird in einem Subtrahierer 1 zur Drehzahlabweichung Δn gebildet, in einem Proportionalglied 2 verstärkt und mit einem Begrenzer 3 gegebenenfalls eingegrenzt, um dann als erstes Eingangssignal a3 einem ersten Summierer 17 vorzuliegen. Mit Hilfe des Inverse-Modells 23 des mechanischen Zweimassensystems, Bausteine 7 bis 14, werden aus den Regelgrößen Motordrehzahl n_{M} = nₗₛₜ, und Motordrehmoment m_{M} alle der Messung schwer zugänglichen Größen ermittelt: Federdrehmoment m_{F}, Lastdrehmoment m_{L} und Lastdrehzahl n_{L}. Die in Fig. 5 und 6 dargestellten Modellparameter werden durch Konstruktionsdaten des mechanischen Systems determiniert, sie können auch, falls erforderlich, am Antrieb ermittelt werden, vgl. Langhoff, Jürgen / Raatz, Eckart: Geregelte Gleichstromantriebe, 1977, Elitera-Verlag, Berlin, S. 129 ff. Der Motordrehzahlistwert n_{M} wird in einem ersten Differenzierglied 7 der Differentiationszeitkonstanten T_{M} zum Signal a7 = m_{M} - m_{F} differenziert. In einem ersten Subtrahierer 8 wird das Federdrehmoment m_{F} aus der Differenz zwischen der Rückführung a21 = m_{M} der unterlagerten Strom- bzw. Drehmomentenregelung und dem Signal a7 als Ausgangssignal a8 gebildet. Ein zweiter Subtrahierer 9, ein Integralglied 10 mit der Integrationszeitkonstanten T_{F} und ein Proportionalglied 11 des Verstärkungsfaktors 1/k_{F} stellen zusammen das Inverse-Modell 23 des in Fig. 6 gezeichneten Pl-Gliedes der Verstärkung k_{F} und der Zeitkonstanten k_{F} T_{F} dar. Das Ausgangssignal a11 des Proportionalgiedes 11 gibt die Differenz der Motordrehzahl n_{M} zum Signal a12 = -n_{L} gebildet, diese wird dann in einem zweiten Differenzierglied 13 der Differentiationszeitkonstanten T_{L} zum Signal a13 = m_{L} - m_{F} umgeformt. Die in einem zweiten Summierer 14 gebildete Summe der Signale a13 und a8 = m_{F} liefert das Lastdrehmoment m_{L} als Signal a14, das nach der Glättung in einem Tiefpaß 15 als Vorsteuerungssignal a15 dem ersten Summierer 17 zur Verfügung steht. Im stationären Zustand hat das Vorsteuerungssignal a15 die gleiche Aufgabe wie der Integralanteil eines Pl-Reglers: dem unterlagerten Strom- bzw. Drehmomentenregelkreis den Sollwert gemäß der Motorbelastung vorzugeben, während die Regelabweichung Δn quasi Null ist.

Die Funktion des Regelungsteils 6 wurde bereits im Zusammenhang mit Fig. 1 beschrieben. Im quasi-stationären Zustand, wenn die Drehzahlabweichung innerhalb einer bestimmten Bandbreite liegt, werden die obere und untere Grenze des Begrenzers 5 geöffnet, so daß das Integrierglied 4 die auftretende Regelabweichung ausregeln kann. Das Ausgangssignal a5 des Bausteins 5 ist das dritte Eingangssignal des ersten Summierers 17.

Bei hinreichend kurzer Abtastzeit der digitalen Drehzahlregelung wird das Signal a11, das den Drehzahlunterschied zwischen dem Motor und der Schwung masse wiedergibt, im Proportianalglied 16 als schwingungsdämpfendes Signal a16 verstärkt und dem ersten Summierer 17 als viertes Eingangssignal zugeführt.

In einem Begrenzer 18 wird die Summe der Signale a3, a5, a15, und a16 gegebenenfalls eingeschränkt.

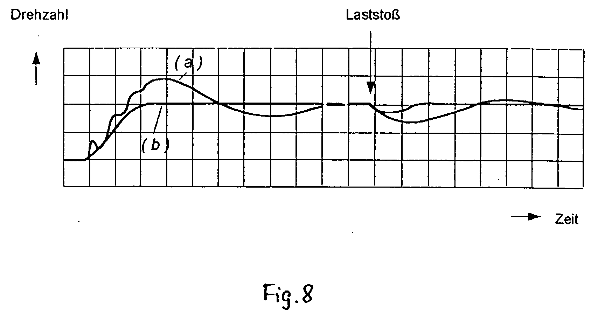

Fig. 8 zeigt den Drehzahlverlauf nach einem Führungs- und einem Laststoß durch Kurve a mit einem nach der Methode des symmetrischen Optimums eingestellten Pl-Regler und durch Kurve b mit dem Drehzahlregelungsverfahren nach der Erfindung.

Mit dem erfindungsgemäßen Verfahren wird nicht nur eine schnelle, überschwingfreie Drehzahlregelung erreicht, sondern vorteilhafterweise auch eine Regelgenauigkeit erzielt, die der eines Pl-Reglers entspricht.

## Patentansprüche

1. Verfahren zur überschwingfreien Drehzahlregelung von Gleichstrommotoren und Drehstrommotoren mit unterlagerter Stromregelung beziehungsweise Drehmomentenregelung in einem starren Antriebsstrang oder in einem schwingfähigen Antriebsstrang,
**dadurch gekennzeichnet,** daß
eine Abweichung des Drehzahlistwertes (nₗₛₜ) vom Drehzahlsollwert (n_{Soll}) durch ein Proportionalglied (2) unmittelbar korrigiert wird, daß das angreifende Lastdrehmoment durch ein lastabhängiges Vorsteuerungssignal (a9, a15) kompensiert wird und daß eine Drehzahlabweichung (Δn) durch ein Integrierglied (4) ausgeregelt wird, dessen maximale Ausgangsgröße (a5) vom Zustand der Drehzahlabweichung (Δn) gesteuert wird, wobei bei einem schwingfähigen Antriebsstrang, der wie ein elastisch gekoppeltes schwingfähiges Zweimassensystem wirkt, die Größen Lastdrehzahl (n_{L}) und Lastdrehmoment (m_{L}) mit Hilfe eines Inverse-Modells (23) des mechanischen Antriebsstranges ermittelt werden.

2. Verfahren nach Anspruch 1, dadurch gekennzeichnet, daß dem Proportionalglied (2) das Integrierglied (4) eingangsseitig parallelgeschaltet ist.

3. Verfahren nach Anspruch 1, dadurch gekennzeichnet, daß der Ausgang des Proportionalgliedes (2) auf den Eingang des Integriergliedes (4) zurückgeführt wird.

4. Verfahren nach einem der Ansprüche 2 oder 3, dadurch gekennzeichnet, daß die maximale Ausgangsgröße des Integriergliedes (4) auf einen festen Wert kleiner als eins begrenzt wird.

5. Verfahren nach einem der Ansprüche 1 bis 4, dadurch gekennzeichnet, daß zum Ausgangssignal des Proportionalgliedes (2) zur unmittelbaren Korrektur des Drehzahlistwertes (nₗₛₜ), zum lastabhängigen Vorsteuerungssignal (a15) und zum Ausgangssignal (a5) des gesteuerten Integriergliedes (4) zur Ausregelung der Drehzahlabweichung (Δn) zusätzlich ein Korrektursignal (a16) zur Dämpfung der mechanischen Eigenschwingung durch die Korrektur der Abweichung zwischen dem Drehzahlistwert (nₗₛₜ) und der aus dem Inverse-Modell (23) des mechanischen Antriebsstranges ermittelten Lastdrehzahl (n_{L}) gebildet wird.

## Claims

1. A method for the overshoot-free rotary speed regulation of dc motors and three-phase motors with underlying current regulation and torque regulation respectively in a rigid drive line or in a drive line which may involve oscillation, characterised in that a deviation of the rotary speed actual value (n_{Ist}) from the rotary speed reference value (n_{Soll}) is corrected directly by a proportional member (2), that the acting load torque is compensated by a load-dependent pilot control signal (a9, a15), and that a rotary speed deviation (Δn) is regulated out by an integrating member (4) whose maximum output value (a5) is controlled by the state of the rotary speed deviation (Δn), wherein in the case of a drive line which may involve oscillation and which acts like an elastically coupled dual-mass system capable of oscillation, the values of the load rotary speed (n_{L}) and the load torque (m_{L}) are ascertained by means of an inverse model (23) of the mechanical drive line.

2. A method according to claim 1 characterised in that the integrating member (4) is connected in parallel on the input side with the proportional member (2).

3. A method according to claim 1 characterised in that the output of the proportional member (2) is taken back to the input of the integrating member (4).

4. A method according to one of claims 2 and 3 characterised in that the maximum output value of the integrating member (4) is limited to a fixed value of less than one.

5. A method according to one of claims 1 to 4 characterised in that in addition to the output signal of the proportional member (2) for direct correction of the rotary speed actual value (n_{Ist}), the load-dependent pilot control signal (a15) and the output signal (a5) of the controlled integrating member (4) for regulating out the rotary speed deviation (Δn), a correction signal (a16) is formed for damping the mechanical natural oscillation by correction of the deviation between the rotary speed actual value (n_{Ist}) and the load rotary speed (n_{L}) ascertained from the inverse model (23) of the mechanical drive line.

## Revendications

1. Procédé de régulation de vitesse exempte de suroscillations pour des moteurs à courant continu et à courant alternatif équipés d'une régulation de courant en cascade ou régulation de couple à l'intérieur d'une chaîne cinématique à vitesse constante ou d'une chaîne cinématique capable d'osciller
caractérisé en ce
qu'un écart de la valeur effective de la vitesse (nᵢₛₜ) par rapport à la valeur de consigne de la vitesse (nₛₒₗₗ) est immédiatement corrigé par un régulateur proportionnel (2), que le couple de charge appliqué est compensé par un signal pilote (a9, a15) fonction de la charge et qu'un écart de vitesse (Δn) est régulé par un circuit d'intégration (4) dont la valeur maximale de sortie (a5) est commandée par la valeur de l'écart de vitesse (Δn), les paramètres vitesse de charge (n_{L}) et couple de charge (m_{L}) étant déterminés, dans une chaîne cinématique capable d'osciller qui agit comme un système à deux masses à couplage élastique pouvant osciller, à l'aide d'un modèle inverse (23) de la chaîne cinématique mécanique.

2. Procédé selon la revendication 1, caractérisé en ce que, du côté de l'entrée, le circuit d'intégration (4) est monté en parallèle avec le régulateur proportionnel (2).

3. Procédé selon la revendication 1, caractérisé en ce que la sortie du régulateur proportionnel (2) est ramenée sur l'entrée du circuit d'intégration (4).

4. Procédé selon l'une des revendications 2 ou 3, caractérisé en ce que la valeur maximale de sortie du régulateur proportionnel (4) est limitée à une valeur fixe inférieure à un.

5. Procédé selon l'une des revendications 1 ou 4, caractérisé en ce que, en plus du signal de sortie du régulateur proportionnel (2) pour la correction immédiate de la vitesse effective (nᵢₛₜ), du signal pilote fonction de la charge (a15) et du signal de sortie (a5) du circuit d'intégration (4) commandé pour la régulation de l'écart de vitesse (Δn), un signal de correction (a16) est généré pour atténuer l'auto-oscillation mécanique en corrigeant l'écart entre la vitesse effective (nᵢₛₜ) et la vitesse en charge (n_{L}) déterminée à partir du modèle inverse (23) de la chaîne cinématique mécanique.
